# EUROPÄISCHE PATENTSCHRIFT

(11) **EP 2 277 222 B1**
(45) Veröffentlichungstag und Bekanntmachung des Hinweises auf die Patenterteilung: **20.07.2022**
(21) Anmeldenummer: 09732618.5
(22) Anmeldetag: 20.04.2009
(51) Int. Cl.: H01M 8/247, H01M 8/2475, H01M 8/04014, H01M 8/04089, H01M 8/1018

(54) **BRENNSTOFFZELLENSYSTEM**
FUEL CELL SYSTEM
SYSTÈME DE PILES À COMBUSTIBLE

(30) Priorität: 18.04.2008 DE 102008020762
(43) Veröffentlichungstag der Anmeldung: 26.01.2011
(73) Patentinhaber: adKor GmbH, 15745 Wildau (DE)
(72) Erfinder: ARAS, Özer, 12347 Berlin (DE); LEU, Christian, 12489 Berlin (DE); HIERL, Andreas, 12526 Berlin (DE); HEROLD, Patrice, 10318 Berlin (DE)
(74) Vertreter: Eisenführ Speiser
(86) Internationale Anmeldenummer: PCT/EP2009/054683
(87) Internationale Veröffentlichungsnummer: WO 2009/127743

(56) Entgegenhaltungen:
- EP-A- 1 777 770
- WO-A-2006/022050
- JP-A- 2004 335 307
- JP-A- 2006 294 409
- US-A- 5 853 910
- US-A1- 2008 026 269

## Beschreibung

Die Erfindung betrifft ein Brennstoffzellensystem für einen Brennstoffzellen-Stack. Die Erfindung betrifft weniger den Brennstoffzellen-Stack als vielmehr die weiteren Komponenten eines Brennstoffzellensystems zur Medienversorgung und Einstellung der Betriebsparameter für einen Brennstoffzellen-Stack, wie insbesondere das Gehäuse und die Medienversorgung mit Luft und Wasserstoff sowie deren Steuerung.

Typische Bestandteile eines Brennstoffzellensystems sind ein Brennstoffzellen-Stack, der die eigentliche Brennstoffzelle in Form einer Vielzahl von Einzelzellen mit jeweils einer Kathode und einer Anode und einem dazwischen angeordneten Elektrolyt, beispielsweise in Form einer Membran, aufweist, sowie ein Gehäuse. Das Gehäuse beherbergt die nötigen Komponenten, z.B. Luftkanäle und Wasserstoffleitung, die nötig sind, um den Anoden des Brennstoffzellen-Stacks den erforderlichen Wasserstoff zuzuführen und den Kathoden des Brennstoffzellen-Stacks den nötigen Sauerstoff, beispielsweise als Teil von zugeführter Umgebungsluft. Weiterhin umfasst das Brennstoffzellensystem Mittel zum Regeln des jeweils zugeführten Volumenstroms von Wasserstoff und Luft sowie für das Temperatur- und Feuchtemanagement, da frei werdende Reaktionswärme und entstehendes Wasser abgeführt werden müssen. Bei der Brennstoffzelle kommt es darauf an, eine vorteilhafte Betriebstemperatur möglichst für die Dauer des Betriebs zu wahren.

Die Erfindung betrifft in diesem Zusammenhang insbesondere ein Brennstoffzellensystem mit einem Brennstoffzellen-Stack mit offener Kathode, bei der die mit Wasserstoff zu versorgenden Anoden mit Kanälen zur zentralen Zufuhr von Wasserstoff verbunden sind, während die mit Sauerstoff zu versorgenden Kathoden quasi frei zugänglich sind und schichtartig nebeneinander angeordnet sind, so dass die Sauerstoffversorgung von Seiten des Gehäuses des Brennstoffzellensystems her erfolgen muss. Das auf Seiten der Kathode aus der Reaktion von Sauerstoff und Wasserstoff resultierende Wasser muss als Feuchtigkeit abgeführt werden. Brennstoffzellen-Stacks mit offener Kathode sind grundsätzlich bekannt.

Der Erfindung liegt die Aufgabe zugrunde, ein Brennstoffzellensystem für einen Brennstoffzellen-Stack mit offener Kathode zu schaffen, das einen möglichst einfachen und effizienten Betrieb erlaubt.

Erfindungsgemäß wird diese Aufgabe durch ein Brennstoffzellensystem gelöst, das
- wenigstens zwei in Strömungsrichtung der Luft hintereinander im Zuluft- oder Abluftkanal angeordnete Lüfter oder Verdichter, vorzugsweise in Form von Axiallüftern oder Diagonallüftern und vorzugsweise mit unterschiedlicher Leistung aufweist.
- eine U-förmige Luftführung mit Zuluft und Abluftkanälen, die eine Eintritts bzw. Austrittsöffnung auf derselben Seite des Gehäuses des Brennstoffzellensystems besitzen, so dass Luft von dieser Seite des Gehäuses mittels eines Zuluftkanals zur Kammer für den Brennstoffzellen-Stack geführt wird und von dort aus über einen Abluftkanal wieder zurück zur gleichen Seite des Gehäuses;
- ein Gehäuse, das neben einer Kammer für einen Brennstoffzellen-Stack und einem Zuluft und einem Abluftkanal zwei weitere, separate Gehäuseabteile aufweist, nämlich ein Gehäuseabteil für die Aufnahme einer vorzugsweise elektronischen Steuerung und ein zweites Gehäuseabteil für die Aufnahme aller Komponenten, die der Zufuhr und ggf. Abfuhr von Wasserstoff zum Brennstoffzellen-Stack dienen; und einen Bypass-Luftkanal zwischen einem Zuluftkanal zum Zuführen von Umgebungsluft zu einer Kammer für einen Brennstoffzellen-Stack und einen Abluftkanal zur Abfuhr von Luft aus der Kammer für den Brennstoffzellen-Stack.
- eine Kammer zur Aufnahme eines Brennstoffzellen-Stacks, die so ausgebildet ist, dass der Brennstoffzellen-Stack relativ zum Gehäuse und zur Kammer schräg angeordnet ist; und
- ein geschlossenes, insbesondere wärmeisolierendes Gehäuse.

Die Erfindung wird durch die beigefügten Ansprüche definiert.

Figur 5 zeigt eine Darstellung der Erfindungsausführung. Abbildungen 1-4 und 6-10 zeigen weitere optionale Details und Ausführungsformen. Von diesen zeigt:
- Fig. 1:: Eine schematische Schnittansicht durch ein bevorzugtes Brennstoffzellensystem;
- Fig. 2:: eine Darstellung ähnlich Fig. 1 zur Veranschaulichung weiterer Gehäuseabteile des Brennstoffzellensystems aus Fig. 1;
- Figuren 3a bis 3c:: ein Brennstoffzellensystem ähnlich Fig. 1 mit einem zusätzlichen Bypass-Luftkanal;
- Fig. 4a und 4b:: ein modular aufgebautes Brennstoffzellensystem in detaillierterer Darstellung;
- Fig. 5:: eine schematische Darstellung zur Illustration des Einsatzes mehrerer Lüfter im Zu- und/oder Abluftkanal für eine Luftzufuhr zu einem Brennstoffzellen-Stack gemäß der Erfindung.
- Fig. 6:: einen Brennstoffzellen-Stack mit offener Kathode und daran angebrachten Lüftungshauben;
- Fig. 7:: eine vorteilhafte Anordnung des Brennstoffzellen-Stacks und der Lüftungshauben;
- Fig. 8:: eine besonders bevorzugte Variante einer Kammer für einen Brennstoffzellen-Stack;
- Fig. 9:: eine schematische Darstellung der relativen Anordnung eines Zuluftkanals und eines Abluftkanals relativ zu einer Kammer für einen Brennstoffzellen-Stack; und
- Fig. 10:: eine schematische Darstellung einer bevorzugten relativen Anordnung einer Kammer für einen Brennstoffzellen-Stack und weiterer Gehäuseabteile für eine Steuerung des Brennstoffzellensystems und für Komponenten zur Wasserstoffversorgung.

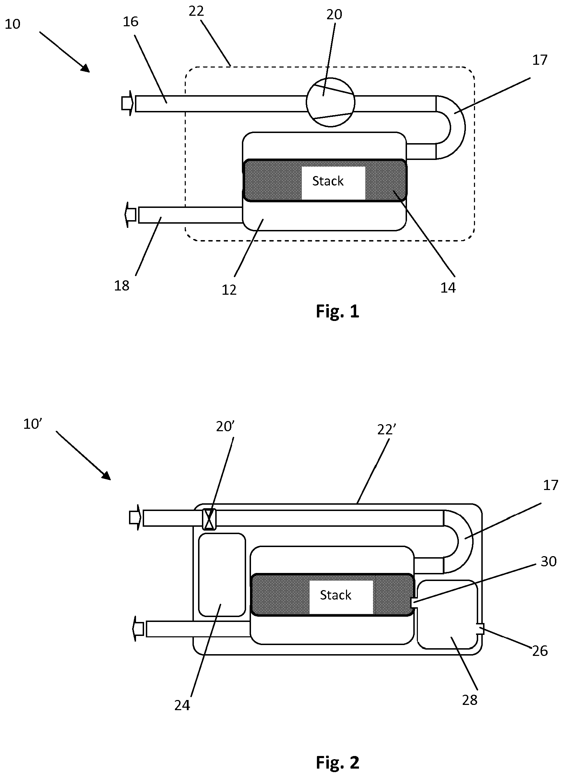

Fig. 1 zeigt in schematischer Darstellung einen Horizontalschnitt durch ein Brennstoffzellensystem 10 mit einer Kammer 12 für einen Brennstoffzellen-Stack 14 sowie einen Zuluftkanal 16 zur Kammer 12 und einen Abluftkanal 18 von der Kammer 12. Zwischen dem Zuluftkanal 16 und der Kammer 12 ist ein Umlenkkanal 17 angeordnet, mit dem die über den Zuluftkanal 16 zuströmende Luft um 180° U-förmig umgelenkt wird. Außerdem ist im Zuluftkanal 16 schematisch ein Verdichter oder Lüfter 20 dargestellt. Diese Komponenten sind von einem schematisch dargestellten Gehäuse 22 umschlossen.

Der Zuluftkanal 16, der Umlenkkanal 17, der Abluftkanal 18, die Kammer 12 sowie der Lütter 20 können als eigenständige Module ausgebildet werden, die austauschbar sind und beliebig miteinander kombiniert werden können.

Fig. 1 illustriert dabei ein Brennstoffzellensystem, in dem der Zuluttkanal 16 und der Abluftkanal 18 jeweils auf der selben Seite (in der Figur der linken Seite) des Gehäuses 22 münden. Hierdurch ergibt sich eine vorteilhafte U-förmige Luftführung, die es erlaubt, das Brennstoffzellensystem praktisch beliebig in einem Raum anzuordnen, wobei wahlweise sowohl Zuluft- als auch Abluftkanal ins Freie münden können oder ins Rauminnere. Entsprechend kann das Brennstoffzellensystem in dem Raum angeordnet werden.

Fig. 2 zeigt ein Brennstoffzellensystem 10' ähnlich dem in Fig. 1 dargestellten, wobei zum einen der Lüfter 20 in Form eines Axiallüfters 20' dargestellt ist. Außerdem zeigt Fig. 2, dass das Gehäuse 22' ein eigenes Gehäuseabteil 24 zur Aufnahme von Steuerungskomponenten, d.h. speziell zur Aufnahme einer Steuerelektronik, aufweist sowie ein weiteres, drittes Gehäuseabteil 26 zur Aufnahme der Komponenten für die Wasserstoffversorgung. Wie Fig. 2 bereits zu entnehmen ist, weist das dritte Gehäuseabteil 26 für die Aufnahme der Komponenten zur Wasserstoffversorgung vorzugsweise einen Wasserstoffanschluss 28 auf, der nicht auf der gleichen Gehäuseseite angeordnet ist wie die Mündungen des Zuluftkanals 16 und des Abluftkanals 18, sondern auf einer anderen, vorzugsweise gegenüberliegenden Gehäuseseite. Auf Seiten der Kammer 12 für den Brennstoffzellen-Stack 14 ist ein Anschlussterminal 30 vorgesehen, über das der Brennstoffzellen-Stack 14 mit den Komponenten für die Wasserstoffversorgung (in Fig. 2 nicht dargestellt) in dem dritten Gehäuseabteil 26 zu verbinden ist, so dass über das Anschlussterminal 30 dem Brennstoffzellen-Stack 14 der erforderliche Wasserstoff zugeführt werden kann. Das Vorsehen eigener Gehäuseabteile für Steuerungskomponenten sowie für Komponenten zur Wasserstoffversorgung stellt einen zweiten, auch unabhängig zu verwirklichenden Erfindungsgedanken dar.

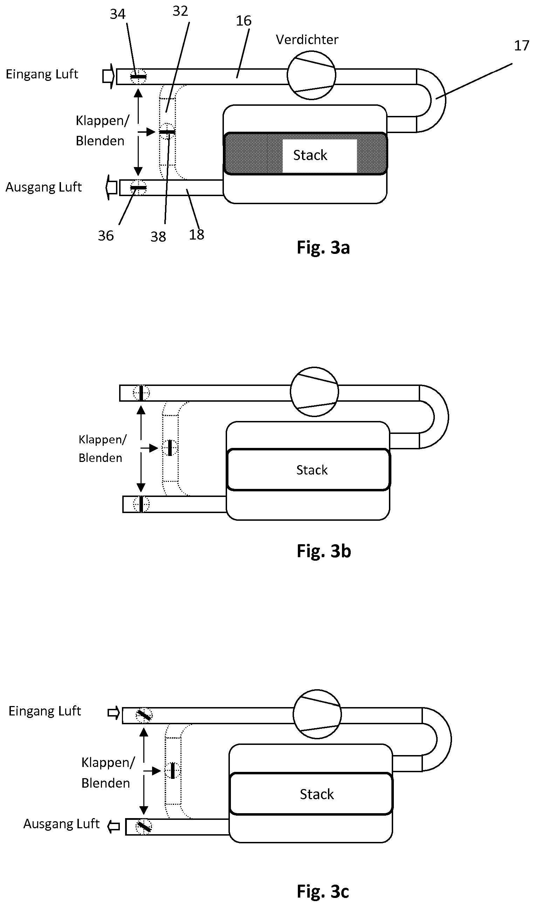

Figuren 3a bis 3c illustrieren schließlich eine weitere Ausführungsform, die einem Bypassluftkanal 32 besteht, der den Zuluftkanal 16 mit dem Abluftkanal 18 verbindet. Wie den drei Figuren ebenfalls zu entnehmen ist, ist im Zuluftkanal 16 eine Zuluftklappe 34 angeordnet, im Abluftkanal 18 eine Abluftklappe 36 und im Bypassluftkanal 32 eine Rezirkulationsluftklappe 38. Mit Zuluftklappe, Abluftklappe und Rezirkulations-Luftklappe soll im Sinne dieser jede Einrichtung gemeint sein, mit der sich der hydraulische Durchmesser des Zuluftkanals, Abluftkanals bzw. Bypasskanals gesteuert verändern lässt, also z.B. auch eine Irisblende oder ein Schieber.

Auch der Bypasskanal 32 sowie die Zuluftklappe 34 und die Abluftklappe 36 können als austauschbare und beliebig kombinierbare Module ausgeführt sein, so dass sich insgesamt ein modularer Aufbau des Brennstoffzellensystems ergibt.

Fig. 3a zeigt einen Betriebszustand, in dem die Zuluftklappe 34 und die Abluftklappe 36 vollständig geöffnet sind und die Rezirkulationsluftklappe 38 vollständig geschlossen ist, so dass der Bypass-Luftkanal 32 de facto wirkungslos ist und sich das Brennstoffsystem wie ein herkömmliches Brennstoffzellensystem verhält.

Bei kalten Umgebungstemperaturen, beispielsweise bei Umgebungstemperaturen von weniger als 10°C, können zum Starten des Brennstoffzellensystems 10 die Zuluftklappe 34 und die Abluftklappe 36 geschlossen und die Rezirkulationsluftklappe 38 geöffnet werden, so dass de facto keine Umgebungsluft in den Zuluftkanal 16 eingesaugt wird, sondern vielmehr Luft über den Zuluftkanal 16, die Kammer 12 für den Brennstoffzellen-Stack 14, den Abluftkanal 18 und den Bypass-Luftkanal 32 zirkuliert. Auf diese Weise kann die im Brennstoffzellen-Stack 14 entstehende Wärme effektiv genutzt werden und das Brennstoffzellensystem 10 so schnell wie möglich auf eine vorteilhafte Betriebstemperatur von beispielsweise 50°C bis 60°C gebracht werden. Dies ist in Fig. 3b abgebildet.

Wie Fig. 3c zeigt, kann auch eine Teil-Rezirkulation der durch die Kammer 12 geführten Luft erfolgen, indem die Zuluftklappe 34 und die Abluftklappe 36 nur teilweise geöffnet bzw. geschlossen sind, während die Rezirkulationsluftklappe 28 geöffnet ist.

Ein Brennstoffzellensystem 10 mit einem Bypass-Luftkanal 32 eröffnet die folgenden möglichen Betriebsweisen:
Beispielsweise kann die Luft mehrfach, z.B. zehnfach, im System rezirkuliert werden, bis der Brennstoffzellen-Stack 14 eine akzeptable Temperatur von beispielsweise mindestens 20°C erreicht hat. Hierbei sind, wie in Fig. 3b dargestellt, die Zuluftklappe 34 und die Abluftklappe 36 geschlossen und die Rezirkulationsluftklappe 38 geöffnet. Wenn eine Brennstoffzellen-Stack-Temperatur von etwa 20°C erreicht ist, können die Zuluftklappe 34 und die Abluftklappe 36 wiederum vollständig oder teilweise geöffnet werden, um dem Brennstoffzellen-Stack teilweise oder vollständig Umgebungsluft zuzuführen.

Statt - wie in Fig. 3b dargestellt - die Zuluftklappe 34 und die Abluftklappe 36 beim Starten des Brennstoffzellensystems vollständig zu schließen, können Zuluftklappe 34 und Abluftklappe 36 auch teilweise geschlossen bzw. geöffnet sein, wie dies in Fig. 3c dargestellt ist.

In Bezug auf Figuren 3a bis 3c ist anzumerken, dass im Falle eines Bypassluftkanals 32 ein erforderlicher Lüfter 32 in Strömungsrichtung hinter der Mündung des Bypassluftkanals in den Zuluftkanal 16 und/oder vor der Mündung des Bypassluftkanals 32 in den Abluftkanal 18 anzuordnen ist, damit der Lüfter auch in dem in Fig. 3b dargestellten Betriebsmodus seine Wirkung entfalten kann.

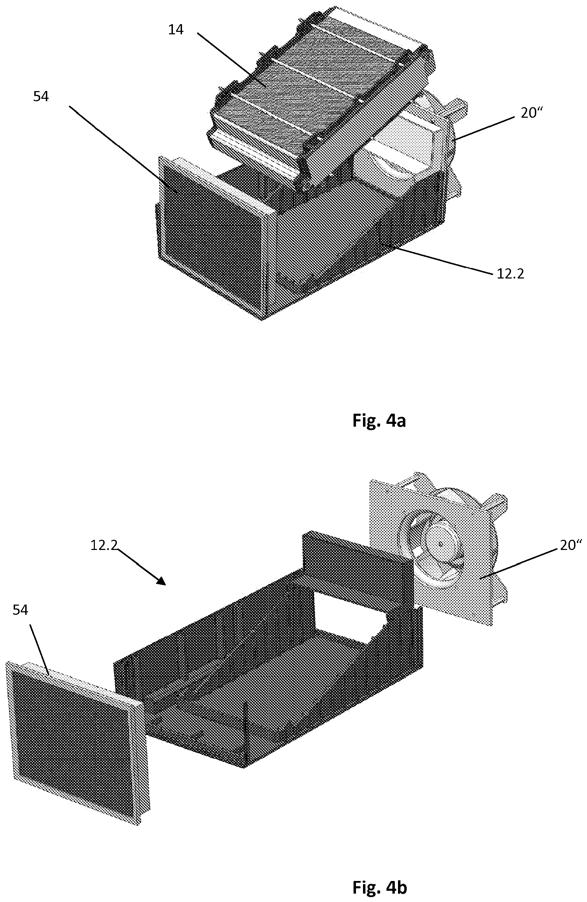

In Figuren 4a und 4b ist beispielhaft modular aufgebautes Brennstoffzellensystem in detaillierterer Darstellung abgebildet.

Gemäß der in den Figuren 4a und 4b dargestellten bevorzugten Ausführungsvariante der Kammer 12 wird diese von zwei Schalen 12.1 und 12. 2 gebildet. Dies erleichtert die Montage. Bei abgenommener Oberschale (Schale 12.1) sind alle Komponenten leicht zugänglich. Die untere Schale 12.2 beinhaltet eine Öffnung und einem umlaufenden Rahmen 42 mit Dichtfläche 44. Dieser Rahmen bildet eine Auflage 42 für den Brennstoffzellen-Stack 14, der die Öffnung verschließt, sobald er aufgelegt ist. Die Schale 12.1 enthält Anpresskonturen 52, die auf den Brennstoffzellen-Stack 14 drücken und diesen auf die Dichtfläche 44 der unteren Schale 12.2 pressen, sobald die Kammer 12 geschlossen wird.

Idealerweise passen sich sowohl die Auflagefläche 42 als auch die Anpresskonturen 52 genau an die Geometrie des Brennstoffzellen-Stacks an. Ein Fixieren des Brennstoffzellen-Stacks in der Kammer erfolgt somit durch Formschluss, sobald die Kammer geschlossen wird und es werden keine separaten Elemente zum Befestigen des Brennstoffzellen-Stacks benötigt.

Durch die Schrägstellung des Brennstoffzellen-Stacks wird die Kammer 12 so geteilt, dass sich zwei Zwischenräume ergeben, die durch das Einsetzen des Brennstoffzellen-Stacks gegeneinander abgedichtet werden. Die Auflage 42 für den Brennstoffzellen-Stack ist gleichzeitig die Dichtfläche. Die Kammer 12 selbst braucht nach außen nicht mehr komplett abgedichtet zu werden. Die in den ersten Zwischenraum einströmende Luft kann nur in den Zwischenraum gelangen, indem sie durch den Brennstoffzellen-Stack 14 hindurchströmt. Kurzschluss-Strömung am Brennstoffzellen-Stack vorbei ist so nicht möglich.

Durch die Schrägstellung des Brennstoffzellen-Stacks wird eine sehr niedrige Bauhöhe der Anordnung erreicht bei gleichzeitig optimaler Luftverteilung. Der Brennstoffzellen-Stack wirkt wie eine "Trennwand" und bildet in der geschlossenen Kammer 12 den sich verjüngenden ersten Zwischenraum 50.1 auf der Seite des Lufteintritts und den sich erweiternden zweiten Zwischenraum 50.2 auf der Seite des Luftaustritts aus. Durch diese Anordnung wird der Brennstoffzellen-Stack selbst optimal durchströmt und es kommt zu keinem Luftstau in den Zwischenräumen.

Das Kammerkonzept ist leicht an verschiedene Stackgrößen des selben Typs anpassbar. Lediglich eine Dimension muss geändert werden, was durch entsprechend ausgebildete Zwischenteile an den Kammerwänden realisiert werden kann.

Das Kammerkonzept verwirklicht einen Teil der bevorzugten Modularität, indem ein Luftfilter 54 oder der Lüfter 20" leicht austauschbar sind. des Erfindungsgedankens sind - statt des üblichen einen Verdichters - mehrere Verdichter, beispielsweise in Form von Axialverdichtern, im Luftkreislauf hintereinander angeordnet (kaskadiert). Beispielsweise können zwei Verdichter 20.1 und 20.2 hintereinander im Zuluftkanal angeordnet sein oder es können zwei Verdichter 20.3 und 20.4 im Abluftkanal hintereinander angeordnet sein. Genauso kann ein erster Verdichter 20.1 im Zuluftkanal und ein zweiter Verdichter 20.4 im Abluftkanal angeordnet sein. Fig. 4 zeigt ein Ausführungsbeispiel mit insgesamt vier Verdichtern 20.1 bis 20.4, von denen jeweils zwei in dem Zuluftkanal 16 und in dem Abluftkanal 18 angeordnet sind. Zwischen Zuluftkanal 16 und Abluftkanal 18 ist schematisch ein Brennstoffzellen-Stack 14' dargestellt. Wenn die Verdichter jeweils als eigenes Modul ausgeführt sind, können sie beliebig miteinander kombiniert werden und so optimal an verschiedene Betriebsbedingungen oder verschiedene Brennstoffzellen-Stacks angepasst werden.

Die Verdichter 20.1 bis 20.4 sind vorzugsweise Axiallüfter und haben außerdem vorzugsweise eine unterschiedliche Nominal- bzw. Maximalleistung.

Durch den Einsatz mehrerer Verdichter bzw. Lüfter anstelle des üblichen einen Verdichters bzw. Lüfters können die typischerweise bei der Verwendung nur eines Lüfters auftretenden nachfolgenden Probleme vermieden werden:
- Der minimale Anlaufvolumenstrom des Verdichters ist zu hoch,
- der maximale Volumenstrom des Verdichters reicht bei hohen Umgebungstemperaturen, beispielsweise von mehr als 35°C, nicht aus und
- zusätzliche Druckverluste durch die Einbindung zusätzlicher Rohrleitungen nach Installation des Brennstoffzellensystems beim Kunden beeinflussen negativ die Verdichterleistung und können von einem einzelnen Verdichter nicht ohne weiteres kompensiert werden.

Beim Einsatz zweier Verdichter kann das Problem des minimalen Anlaufvolumenstroms dadurch gelöst werden, dass bei geringem Luftbedarf im Teillastbereich des Brennstoffzellensystems nur einer der beiden Lüfter betrieben wird. Bei der Verwendung von Axiallüftern kann eine insgesamt höhere Druckdifferenz zwischen Einlass und Auslass erzeugt werden, weil die beiden Axiallüfter in Reihe geschaltet sind, so dass sich die Druckleistung des Gesamtverdichters erhöht. Alternativ können auch zwei Verdichter parallel zueinander angeordnet werden, um den Volumenstrom zu erhöhen. So kann durch eine entsprechende Anordnung der Verdichter bzw. durch gezieltes Ein- und Ausschalten die benötigte Lüfterleistung in effizienterer Weise realisiert werden als dies mit einem einzigen Lüfter möglich wäre, der ggf. - beispielsweise im Teillastbetrieb - mit vermindertem Wirkungsgrad betrieben werden müsste. Auf diese Weise lässt sich auch der Gesamtwirkungsgrad des Brennstoffzellensystems erhöhen. Insgesamt können somit durch einzelne Ansteuerung der Verdichter mühelos beliebige Leistungspunkte angesteuert werden.

Hierzu kann auch ein weiterer Erfindungsgedanke beitragen, der in den Figuren nicht bildlich dargestellt ist und der darin besteht, dass dem Lüfter oder Verdichter eine in einem Betriebszustand federbelastete, als Druckminderer wirkende Luftklappe zur Optimierung des Arbeitspunktes des Verdichters oder Lüfters im Teillastbereich zugeordnet ist, wobei die Luftklappe bei Volllast geöffnet werden kann, so dass sie dann nicht als Druckminderer wirkt.

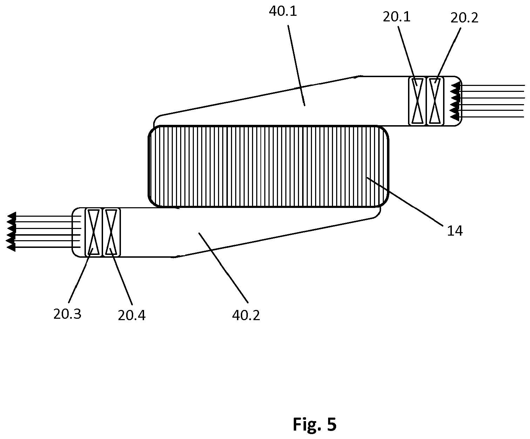

Wenn, wie in Fig. 5 dargestellt, wenigstens ein Verdichter im Zuluftkanal 16 drückend und der andere Verdichter im Abluftkanal 18 saugend angeordnet ist, so dass ein Verdichter druckseitig und der andere Verdichter saugseitig angebracht ist, ergibt sich außerdem eine Verbesserung der Gleichverteilung der Strömung über den Brennstoffzellen-Stack 14. Insgesamt ergeben sich die Vorteile, dass der Volumenstrom und der Druck der Versorgung leicht skalierbar sind. Außerdem ergibt sich ein einfacher Aufbau mit geringer Baugröße, da auch ansonsten eher ungünstige Axiallüfter verwendet werden können. Schließlich kann auch die Gleichverteilung der Luftströmung über den Stack verbessert werden.

Beliebig kann die Anordnung des Brennstoffzellen-Stacks 14 in der Kammer 12 bzw. dem Gehäuse 22 optimiert werden.

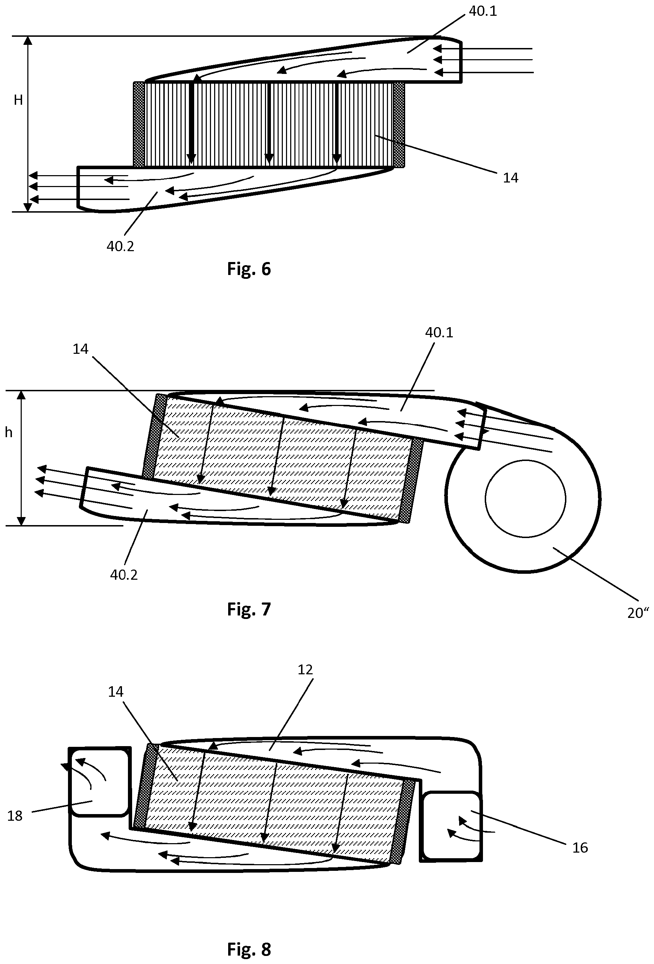

Bei derzeit bekannten Brennstoffzellensystemen mit einem Brennstoffzellen-Stack mit offener Kathode sind üblicherweise Lüftungshauben 40.1 und 40.2 vorgesehen, wie sie im Zusammenhang mit einem Stack 14 in Fig. 6 dargestellt sind. Die Luft wird einer ersten Lüftungshaube 40.1 zugeführt und durch die Lüftungshaube 40.1 in den Stack 14 eingeleitet und strömt an den offenen Kathoden vorbei durch den Stack hindurch zur zweiten Lufthaube 40.2.

Um zu optimierten Gehäuseabmaßen zu gelangen, die ein insgesamt kleines Außengehäuse erlauben und damit auch zu insgesamt geringeren Wärmeverlusten durch die Gehäusewand hindurch führen, kann der Stack 14 schräg angeordnet werden, so wie dies in Fig. 7 dargestellt ist. Die Außenseiten der Lüftungshauben 40.1 und 40.2 verlaufen dabei vorzugsweise parallel zu einer Außenwand, beispielsweise einer Oberseite oder Unterseite des Gehäuses 20 des Brennstoffzellensystems 10.

Fig. 7 zeigt darüber hinaus noch einen Radiallüfter 20" als Verdichter, der an die Zulufthaube 40.1 angeschlossen ist.

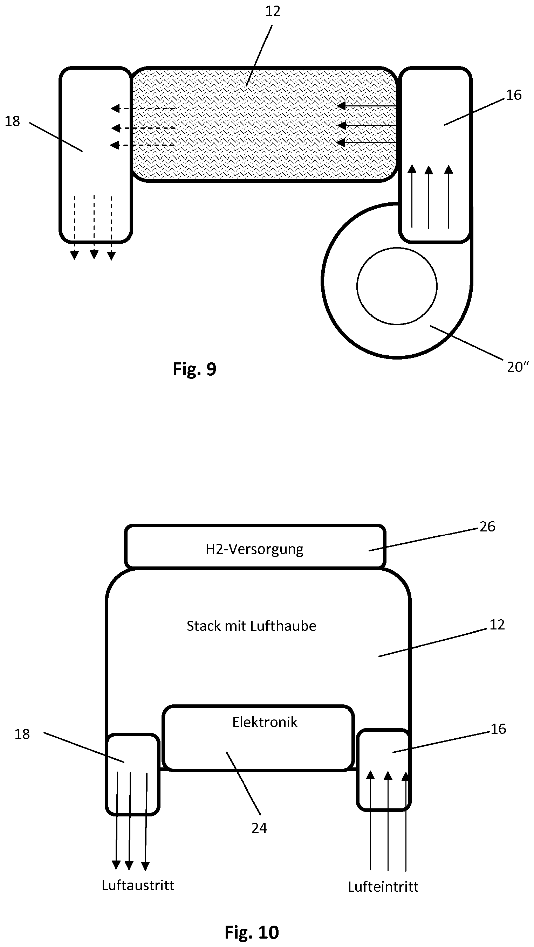

Fig. 8 zeigt schließlich eine besonders optimierte Variante der Anordnung eines Brennstoffzellen-Stacks 14 in einer eigenen Kammer 12 des Gehäuses 22. Dabei ist die Kammer 12 so ausgerichtet, dass ihre Kammerwände 12.1 und 12.2 in etwa parallel zu Außenwänden des Gehäuses 22 verlaufen. Der Brennstoffzellen-Stack 14 ist schräg in der Kammer 12 angeordnet. Wie Fig. 7 zu entnehmen ist, schließen sich außerdem ein Zuluftkanal 16 und der Abluftkanal 18 so an die Kammer 12 an, dass sich in der Aufsicht (Fig. 7 stellt einen Vertikalschnitt dar) eine Anordnung von Zuluftkanal 16, Kammer 12 für den Brennstoffzellen-Stack 14 und Abluftkanal 18 ergibt, wie sie schematisch in Fig. 9 dargestellt ist. Zu erkennen ist die bereits mit Bezug auf Figuren 1 und 2 erläuterte U-förmige Luftführung.

Fig. 10 illustriert schließlich noch eine Ausführungsform, die in der Aufteilung des Gehäuses 22 in wenigstens drei Gehäuseabteile besteht, von denen ein Gehäuseabteil die Kammer 12 und die Luftkanäle 16 und 18 umfasst und ein davon getrenntes Gehäuseabteil 24 Steuerungskomponenten enthält und ein drittes Gehäuseabteil 26 schließlich die Komponenten für die Wasserstoffversorgung.

Werden alle Ausführungsformen in einem Brennstoffzellensystem verwirklicht, ergibt sich ein Brennstoffzellensystem, das ein kompaktes Gehäuse mit geringen Ausmaßen besitzt. Dies besteht vorzugsweise aus einem wärmeisolierenden Material, um Wärmeverluste weiter zu reduzieren.

Die Erfindung trägt zu einem Brennstoffzellensystem bei, das auch in Teillastbereichen einen hohen Wirkungsgrad besitzt und auch bei niedrigen Umgebungstemperaturen schnell auf die optimale Betriebstemperatur zu bringen ist.

## Patentansprüche

1. Brennstoffzellensystem (10) mit einem Gehäuse (22) mit einer Kammer (12) zur Aufnahme eines Brennstoffzellen-Stacks (14) sowie mit einem Zuluftkanal (16) zum Zuführen von Umgebungsluft zu der Kammer (12) und einem Abluftkanal (18) zum Abführen von Luft aus der Kammer (12) an die Umgebung, **dadurch gekennzeichnet, dass** das Brennstoffzellensystem (10) wenigstens zwei in Strömungsrichtung der Luft hintereinander im Zuluft- und/oder Abluftkanal (18) angeordnete Lüfter (20) oder Verdichter aufweist.

2. Brennstoffzellensystem (10) nach Anspruch 1, **dadurch gekennzeichnet, dass** die Lüfter (20) Axiallüfter (20') oder Diagonallüfter sind.

3. Brennstoffzellensystem (10) nach Anspruch 1 oder 2, **dadurch gekennzeichnet, dass** die Lüfter (20) eine unterschiedliche Nenn- oder Maximalleistung besitzen.

4. Brennstoffzellensystem (10) nach einem der Ansprüche 1 bis 3, **dadurch gekennzeichnet, dass** wenigstens ein Lüfter (20) oder Verdichter in dem Zuluftkanal (16) angeordnet und wenigstens ein weiterer Lüfter (20) oder Verdichter in dem Abluftkanal (18) angeordnet ist.

5. Brennstoffzellensystem (10) nach einem der Ansprüche 1 bis 4, **dadurch gekennzeichnet, dass** eine Eintrittsöffnung des Zuluftkanals (16) und eine Austrittsöffnung des Abluftkanals (18) auf derselben Seite des Gehäuses (22) des Brennstoffzellensystems (10) angeordnet sind, so dass sich eine U-förmige Luftführung ergibt.

6. Brennstoffzellensystem (10) nach Anspruch 5, **dadurch gekennzeichnet, dass** das Brennstoffzellensystem (10) einen Bypass-Luftkanal (32) aufweist, der von dem Abluftkanal (18) zu dem Zuluftkanal (16) führt.

7. Brennstoffzellensystem (10) nach Anspruch 6, **dadurch gekennzeichnet, dass** in dem Bypass-Luftkanal (32) eine Einrichtung zum gesteuerten Verändern des hydraulischen Durchmessers des Bypass-Luftkanals (32) zum wahlweisen Öffnen oder Schließen des Bypass-Luftkanals (32) angeordnet ist.

8. Brennstoffzellensystem (10) nach Anspruch 7, **dadurch gekennzeichnet, dass** in dem Zuluftkanal (16) und/oder dem Abluftkanal (18) eine Einrichtung zum gesteuerten Verändern des hydraulischen Durchmessers des Zuluft- bzw. Abluftkanals (18) zum wahlweisen Öffnen oder Schließen des Zuluftkanals (16) und/oder des Abluftkanals (18) angeordnet ist.

9. Brennstoffzellensystem (10) insbesondere nach einem der Ansprüche 1 bis 8, mit einem Gehäuse (22) mit einer Kammer (12) zur Aufnahme eines Brennstoffzellen-Stacks (14) sowie mit einem Zuluftkanal (16) zum Zuführen von Umgebungsluft zu der Kammer (12) und einem Abluftkanal (18) zum Abführen von Luft aus der Kammer (12) an die Umgebung sowie mit wenigstens einem in dem Zuluftkanal (16) oder dem Abluftkanal (18) angeordneten Lüfter (20) oder Verdichter, **dadurch gekennzeichnet, dass** dem Lüfter (20) oder Verdichter eine in einem Betriebszustand federbelastete, als Druckminderer wirkende Luftklappe zur Optimierung des Arbeitspunktes des Verdichters oder Lüfters (20) im Teillastbereich zugeordnet ist, wobei die Luftklappe bei Volllast geöffnet werden kann, so dass sie dann nicht als Druckminderer wirkt.

10. Brennstoffzellensystem (10) nach einem der Ansprüche 1 bis 9, **dadurch gekennzeichnet, dass** die Kammer (12) zur Aufnahme eines Brennstoffzellen-Stacks (14) so ausgebildet ist, dass der Brennstoffzellen-Stack (14) relativ zur Kammer (12) schräg angeordnet ist.

11. Brennstoffzellensystem (10) nach Anspruch 10, **dadurch gekennzeichnet, dass** der Brennstoffzellen-Stack (14) schräg zu den Außenwänden des Gehäuses (22) angeordnet ist.

12. Brennstoffzellensystem (10) nach einem der Ansprüche 1 bis 11, **dadurch gekennzeichnet, dass** das Gehäuse (22) wärmeisolierend ausgeführt ist.

## Claims

1. Fuel cell system (10) comprising a housing (22) with a chamber (12) for receiving a fuel cell stack (14) as well as a supply air duct (16) for supplying ambient air to the chamber (12) and an air exhaust duct (18) for discharging air from the chamber (12) to the environment, **characterized in that** the fuel cell system (10) comprises at least two fans (20) or compressors arranged one behind the other in the supply air and/or air exhaust duct (18) in the direction of air flow.

2. Fuel cell system (10) according to claim 1, **characterized in that** the fans (20) are axial fans (20') or diagonal fans.

3. Fuel cell system (10) according to claim 1 or 2, **characterized in that** the fans (20) have a different nominal or maximum power.

4. Fuel cell system (10) according to one of claims 1 to 3, **characterized in that** at least one fan (20) or compressor is arranged in the supply air duct (16) and at least one further fan (20) or compressor is arranged in the air exhaust duct (18).

5. Fuel cell system (10) according to one of claims 1 to 4, **characterized in that** an inlet opening of the supply air duct (16) and an outlet opening of the air exhaust duct (18) are arranged on the same side of the housing (22) of the fuel cell system (10), resulting in a U-shaped air flow.

6. Fuel cell system (10) according to claim 5, **characterized in that** the fuel cell system (10) comprises a bypass air duct (32) leading from the air exhaust duct (18) to the supply air duct (16).

7. Fuel cell system (10) according to claim 6, **characterized in that** means for controllably altering the hydraulic diameter of the bypass air duct (32) is arranged in the bypass air duct (32) for selectively opening or closing the bypass air duct (32).

8. Fuel cell system (10) according to claim 7, **characterized in that** a means for controllably altering the hydraulic diameter of the supply air duct (16) and/or the air exhaust duct (18) is arranged in the supply air duct (16) and/or the air exhaust duct (18) for selectively opening or closing the supply air duct (16) and/or the air exhaust duct (18).

9. Fuel cell system (10), in particular according to one of claims 1 to 8, having a housing (22) with a chamber (12) for accommodating a fuel cell stack (14) as well as having a supply air duct (16) for supplying ambient air to the chamber (12) and an air exhaust duct (18) for discharging air from the chamber (12) to the surroundings, as well as having at least one fan (20) or compressor arranged in the supply air duct (16) or the air exhaust duct (18), **characterized in that** the fan (20) or compressor is assigned an air flap which is spring-loaded in one operating state and acts as a pressure reducer in order to optimize the operating point of the compressor or fan (20) in the partial load range, wherein the air flap can be opened at full load so that it then does not act as a pressure reducer.

10. Fuel cell system (10) according to one of claims 1 to 9, **characterized in that** the chamber (12) for receiving a fuel cell stack (14) is formed such that the fuel cell stack (14) is arranged obliquely relative to the chamber (12).

11. Fuel cell system (10) according to claim 10, **characterized in that** the fuel cell stack (14) is arranged obliquely to the outer walls of the housing (22).

12. Fuel cell system (10) according to one of claims 1 to 11, **characterized in that** the housing (22) is designed to be thermally insulating.

## Revendications

1. Système (10) de piles à combustible comprenant une enveloppe (22) ayant une chambre (12) de réception d'un empilement (14) de piles à combustible, ainsi qu'un conduit (16) d'apport pour l'apport d'air ambiant à la chambre (12) et un conduit (18) d'évacuation pour l'évacuation d'air de la chambre (12) à l'atmosphère ambiante, **caractérisé en ce que** le système (10) de piles à combustible a au moins deux ventilateurs (20) ou compresseurs montés l'un derrière l'autre dans le sens d'écoulement de l'air dans le conduit d'apport et/ou le conduit (18) d'évacuation de l'air.

2. Système (10) de piles à combustible suivant la revendication 1, **caractérisé en ce que** les ventilateurs (20) sont des ventilateurs (20') axiaux ou des ventilateurs diagonaux.

3. Système (10) de piles à combustible suivant la revendication 1 ou 2, **caractérisé en ce que** les ventilateurs (20) ont une puissance nominale ou maximum différente.

4. Système (10) de piles à combustible suivant l'une des revendications 1 à 3, **caractérisé en ce qu'**au moins un ventilateur (20) ou compresseur est monté dans le conduit (16) d'apport de l'air et au moins un autre ventilateur (20) ou compresseur est monté dans le conduit (18) d'évacuation de l'air.

5. Système (10) de piles à combustible suivant l'une des revendications 1 à 4, **caractérisé en ce qu'**une ouverture d'entrée du conduit (16) d'apport de l'air et une ouverture de sortie du conduit (18) d'évacuation de l'air sont disposées du même côté de l'enveloppe (22) du système (10) de piles à combustible, de manière à donner une conduite de l'air en forme de U.

6. Système (10) de piles à combustible suivant la revendication 5, **caractérisé en ce que** le système (10) de piles à combustible a un conduit (32) pour de l'air en dérivation, qui va du conduit (18) d'évacuation de l'air au conduit (16) d'apport de l'air.

7. Système (10) de piles à combustible suivant la revendication 6, **caractérisé en ce que**, dans le conduit (32) de dérivation pour de l'air, est monté un dispositif de variation commandé du diamètre hydraulique du conduit (32) de dérivation pour de l'air, afin d'ouvrir ou de fermer au choix le conduit (32) de dérivation pour de l'air.

8. Système (10) de piles à combustible suivant la revendication 7, **caractérisé en ce que**, dans le conduit (16) d'apport de l'air et/ou dans le conduit (18) d'évacuation de l'air, est monté un dispositif de variation commandée du diamètre hydraulique du conduit d'apport de l'air ou du conduit (18) d'évacuation de l'air, afin d'ouvrir ou de fermer au choix le conduit (16) d'apport de l'air et/ou le conduit (18) d'évacuation de l'air.

9. Système (10) de piles à combustible, notamment suivant l'une des revendications 1 à 8, comprenant une enveloppe (22) ayant une chambre (12) de réception d'un empilement (14) de piles à combustible, ainsi qu'un conduit (16) d'apport pour l'apport d'air ambiant à la chambre (12) et un conduit (18) d'évacuation pour l'évacuation d'air de la chambre (12) à l'atmosphère ambiante, ainsi qu'un ventilateur (20) ou compresseur monté dans le conduit (16) d'apport de l'air ou dans le conduit (18) d'évacuation de l'air, **caractérisé en ce qu'**au ventilateur (20) ou au compresseur est associé, pour l'optimisation du point de travail du compresseur ou du ventilateur (20) dans le domaine de la charge partielle, un volet pour de l'air agissant en détendeur est soumis à l'action d'un ressort dans un état de fonctionnement, le volet pour de l'air pouvant être ouvert à pleine charge, de manière à ne plus agir alors comme détendeur.

10. Système (10) de piles à combustible suivant l'une des revendications 1 à 9, **caractérisé en ce que** la chambre (12) de réception d'un empilement (14) de piles à combustible et constituée de manière à ce que l'empilement (14) de piles à combustible soit disposé en étant incliné par rapport à la chambre (12).

11. Système (10) de piles à combustible suivant la revendication 10, **caractérisé en ce que** l'empilement (14) de piles à combustible est disposé en étant incliné par rapport aux parois extérieures de l'enveloppe (22).

12. Système (10) de piles à combustible suivant l'une des revendications 1 à 11, **caractérisé en ce que** l'enveloppe (22) est calorifugée.
